# EUROPÄISCHE PATENTSCHRIFT

(11) **EP 2 220 928 B1**
(45) Veröffentlichungstag und Bekanntmachung des Hinweises auf die Patenterteilung: **04.01.2012**
(21) Anmeldenummer: 10000829.1
(22) Anmeldetag: 27.01.2010
(51) Int. Cl.: A01D 69/02

(54) **Landwirtschaftliches Anbaugerät**
Agricultural cultivation device
Machine agricole

(30) Priorität: 19.02.2009 DE 102009009628
(43) Veröffentlichungstag der Anmeldung: 25.08.2010
(60) Teilanmeldung: 11008202.1
(73) Patentinhaber: Alois Pöttinger Maschinenfabrik Ges. m.b.H., 4710 Grieskirchen (AT)
(72) Erfinder: Pöttinger, Klaus, 4710 Grieskirchen (AT); Schremmer, Wolfgang, 4062 Thening (AT); Baldinger, Markus, 4084 St. Agatha (AT)
(74) Vertreter: Thoma, Michael

(56) Entgegenhaltungen:
- EP-A1- 1 174 019
- EP-A1- 1 731 014
- EP-A2- 1 432 104
- DE-A1- 2 141 706
- GB-A- 1 593 698
- GB-A- 2 332 132

## Beschreibung

Die vorliegende Erfindung betrifft ein landwirtschaftliches Anbaugerät zum Anbau an einen Schlepper, mit einem Arbeitsaggregat zur Ausführung einer landwirtschaftlichen Funktion, insbesondere Ernte- oder Saatgutbearbeitung oder Bodenbearbeitung, wobei das Arbeitsaggregat zumindest einen drehbar gelagerten Arbeitskorpus aufweist, der von einem Antrieb rotatorisch antreibbar ist.

Bei landwirtschaftlichen Anbaugeräten wie beispielsweise einem Ladewagen, einer Mähmaschine oder einer Heuwerbungsmaschine in Form eines Zetters oder eines Schwaders werden die Arbeitsaggregate, die die landwirtschaftlichen Funktionen des jeweiligen Arbeitsgeräts ausführen, üblicherweise durch einen mechanischen Antrieb angetrieben, der über eine Gelenkwelle von der Zapfwelle des Schleppers her gespeist wird. Derartige landwirtschaftliche Funktionen sind beispielsweise die Erntegutbearbeitung, was im Falle eines Ladewagens die Aufnahme des Ernteguts vom Boden durch eine Pickup-Stachelwalze, die Förderung des aufgenommenen Ernteguts in einen Erntegutspeicher mittels eines Förderrotors und auch das Abladen des Ernteguts mittels Dosierwalzen umfasst. Bei entsprechend anderen Anbaugeräten sind entsprechend andere landwirtschaftliche Funktionen auszuführen, wobei mit "landwirtschaftliche Funktionen" insbesondere die Kernaufgaben des jeweiligen Anbaugeräts gemeint sind.

Derartige mechanische Antriebe von der Zapfwelle des Schleppers her erfordern je nach Position des jeweiligen Arbeitsaggregats nicht nur die lange Gelenkwelle, die zum Schlepper führt, sondern auch diverse Verzweigungswellen und Umlenkgetriebe, um den Antriebsstrang zum jeweiligen Arbeitsaggregat zu führen. Dies kann zum Teil sehr aufwändig sein und bringt regelmäßig eine nicht unbedeutende Gewichtserhöhung mit sich. Ein anderes Problem solcher mechanischen Antriebe ist die nur begrenzt mögliche Änderung der Antriebsgeschwindigkeit, die im Wesentlichen nur über eine Drehzahländerung der Zapfwelle des Schleppers bewirkt werden kann. Eine relative Änderung der Antriebsgeschwindigkeiten verschiedener Arbeitsaggregate dahingehend, dass ein Arbeitsaggregat schneller und ein anderes langsamer gestellt wird, ist regelmäßig nicht möglich bzw. erfordert den Einbau aufwändiger, hinsichtlich ihrer Untersetzung bzw. Übersetzung variabler Getriebe.

Es wurde daher bereits vorgeschlagen, die genannten Arbeitsaggregate hydraulisch anzutreiben. Hierbei werden an dem jeweiligen Arbeitsaggregat Stellantriebe beispielsweise in Form von Hydromotoren vorgesehen, zu denen nur relativ einfach zu verlegende Hydraulikdruckleitungen zu führen sind. Die Hydraulikantriebe sind jedoch nicht billig und bei auftretenden Leckagen nicht unkritisch bezüglich der Reinhaltung von Boden und Erntegut. Vor allen Dingen haben hydraulische Antriebe jedoch einen schlechten Wirkungsgrad und sind eher schlecht regelbar.

Es wurde daher bereits auch vorgeschlagen, am Anbaugerät elektrisch arbeitende Antriebe vorzusehen, um die die jeweilige landwirtschaftliche Arbeitsfunktion ausführenden Arbeitsaggregate anzutreiben. Beispielsweise beschreibt die DE 10 2007 024 644 A1 ein System umfassend einen Schlepper und ein landwirtschaftliches Anbaugerät, bei dem am Anbaugerät eine elektrische Last zum Ausführen einer landwirtschaftlichen Funktion vorgesehen sein soll, die über eine elektrische Schnittstelle zwischen Schlepper und Anbaugerät mit elektrischer Energie gespeist wird. Das Anbaugerät soll hierbei frei von eigener Leistungselektronik ausgebildet sein; die Leistungselektronik wird schlepperseitig vorgesehen. In ähnlicher Weise beschreibt die DE 10 2007 024 645 A1 ein elektrisches Anbaugerät mit einem Elektroantrieb, der vom Schlepper her mit Strom versorgt wird. Die DE 10 2005 019 362 A1 beschreibt die nähere Ausgestaltung einer elektrischen Schnittstelle zum Übertragen elektrischer Energie zwischen einem Schlepper und einem daran ankoppelbaren landwirtschaftlichen Arbeitsgerät. Die DE 103 03 050 A1 schlägt zur Versorgung eines Anbaugeräts mit ausreichend elektrischer Energie vor, an die Zapfwelle des Schleppers einen Generator zu koppeln, der elektrische Lasten des Traktors und auch eines landwirtschaftlichen Anbaugeräts mit einer Generatorspannung antreibt, die deutlich über der üblichen 12 Volt-Bordnetzspannung von Schleppern liegt.

Die GB 15 93 698 zeigt ein landwirtschaftliches Anbaugerät in Form einer Mähwerksanordnung, deren Mähtrommeln jeweils von einem Elektromotor angetrieben werden können. Auf der Deichsel des Mähwerks ist ein Wechselstromgenerator vorgesehen, der von der Zapfwelle des Schleppers her angetrieben wird und eine Wechselspannung für die Elektromotoren der Mähwerkstrommeln bereitstellt.

Aus der EP 11 74 019 A1 ist ein Mähdrescher bekannt, dessen Gutbearbeitungsaggregate wie Dreschtrommel, Wendetrommel und Schüttler jeweils durch Elektromotoren angetrieben werden. Der Mähdrescher weist hierzu einen elektrischen Generator auf, der von einem Verbrennungsmotor angetrieben wird.

Die GB 23 32 132 zeigt einen selbstfahrenden Rasenmäher, dessen Schneidrotoren von Elektromotoren angetrieben werden können. Dies zeigt in ähnlicher Ausbildung auch die Schrift DE 21 41 706. Ferner beschreibt die EP 17 31 014 A1 eine handgeführte landwirtschaftliche Maschine in Form eines Mähers, der durch Fahrwalzen mit stacheligen Vorsprüngen antreibbar ist, wobei die genannten Fahrwalzen Elektroantriebe zum Antreiben des Fahrzeugs aufweisen.

Derartige elektrische Antriebe haben sich in der Praxis allerdings bislang nicht durchsetzen können. Dies liegt einerseits daran, dass die Arbeitsaggregate, die die landwirtschaftliche Funktion des jeweiligen Anbaugeräts ausführen, regelmäßig großdimensioniert sind und daher große Antriebsleistungen benötigen, so dass die entsprechenden elektrischen Antriebe ebenfalls groß zu dimensionieren sind, was entsprechenden Bauraum im Bereich des Arbeitsaggregats verschlingt. Zudem ist der vom Wirkungsgrad her günstige Drehzahlbereich eines Elektromotors oftmals nicht ohne weiteres mit der für das Arbeitsaggregat erforderlichen Drehzahl kompatibel. Vor allem aber widerstehen die vergleichsweise empfindlichen Elektroantriebe nicht ohne weiteres dem rauen Betrieb an landwirtschaftlichen Arbeitsaggregaten, die oftmals harten Schlägen durch Steine oder dergleichen, Feuchte, Staub und Verkrustungen durch Erdreich und dergleichen ausgesetzt sind.

Der vorliegenden Erfindung liegt die Aufgabe zugrunde, ein verbessertes landwirtschaftliches Anbaugerät der genannten Art zu schaffen, das Nachteile des Standes der Technik vermeidet und Letzteren in vorteilhafter Weise weiterbildet. Vorzugsweise soll ein leicht zu steuernder und mit Energie zu versorgender Antrieb geschaffen werden, der bei leichter Bauweise ohne zusätzlichen Platzbedarf dem harten Betrieb an dem die landwirtschaftliche Funktion des Anbaugeräts ausführenden Arbeitsaggregat gewachsen ist.

Erfindungsgemäß wird diese Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, den Antrieb des zumindest einen Arbeitsaggregats des Anbaugeräts elektrisch auszubilden und in den Arbeitskorpus des Arbeitsaggregats zu integrieren, so dass der im Innenraum des Arbeitskorpus befindliche Platz ausgenutzt und der Elektromotor von dem genannten Arbeitskorpus gehäuseartig umgeben wird. Erfindungsgemäß besitzt der Antrieb zum rotatorischen Antreiben des genannten Arbeitskorpus des Arbeitsaggregats einen Elektromotor, der im Inneren des Arbeitskorpus aufgenommen ist. Hierdurch können die Vorteile eines elektrischen Antriebs genutzt, dessen Nachteile jedoch vermieden werden. Es wird eine einfache Steuerung der Antriebsgeschwindigkeit bei einfacher Energieversorgung erreicht. Gleichzeitig wird die Anfälligkeit des Elektromotors gegenüber dem harten Betrieb an dem landwirtschaftlichen Arbeitsaggregat beseitigt, da der Elektromotor vom Arbeitskorpus selbst geschützt wird. Gleichzeitig wird der Innenraum des meist großdimensioniert auszulegenden Arbeitskorpus genutzt, so dass kein zusätzlicher Bauraum benötigt wird.

Der Arbeitskorpus, in dem der Elektromotor ingetriert ist, ist grundsätzlich an die jeweilige landwirtschaftliche Funktion, die von dem Arbeitskorpus ausgeführt wird, angepasst, so dass der Arbeitskorpus grundsätzlich verschieden ausgebildet sein kann. Je nach landwirtschaftlicher Funktion kann der Arbeitskorpus unterschiedliche Formgebungen besitzen. Besonders vorteilhaft ist das Vorsehen eines elektrischen Antriebs im Inneren des Arbeitskorpus dabei dann, wenn der Arbeitskorpus einen länglichen Hohlkörper beispielsweise in Form eines Strangprofils mit gleich bleibendem Querschnitt besitzt, das den Elektromotor umfangsseitig umschließt. Typischerweise kann die Länge des Arbeitskorpus ein Vielfaches seines Durchmessers betragen, beispielsweise mehr als fünf mal so groß als der Durchmesser sein. Wie gesagt ist die Formgebung des Arbeitskorpus jedoch in Abhängigkeit der wahrzunehmenden landwirtschaftlichen Funktion grundsätzlich verschieden.

Insbesondere kann der Elektromotor in einen länglichen Hohlkörper in Form eines Rohres oder einer Walze integriert sein.

In Weiterbildung der Erfindung bildet der Arbeitskorpus des Arbeitsaggregats, in den der Elektromotor ingetriert ist, ein Gehäuse für den Elektromotor, das den genannten Elektromotor zumindest umfangsseitig vorzugsweise vollständig umschließt. Der Elektromotor kann hierbei grundsätzlich ein eigenes Motorgehäuse aufweisen, das dann von dem Arbeitskorpus nach Art einer zweiten Haut bzw. eines Außenmantels umgeben wird. Hierdurch können Standardmotoren Verwendung finden, die in einfacher Weise in den Innenraum des Arbeitskorpus eingebaut werden.

Alternativ kann jedoch auch vorgesehen sein, dass der Elektromotor selbst ohne eigenes Motorgehäuse ausgebildet ist und der den Elektromotor umgebende Arbeitskorpus das in diesem Fall dann einzige Gehäuse des Elektromotors bildet. Hierdurch kann eine besonders klein bauende Ausführung erzielt werden bzw. kann umgekehrt der im Arbeitskorpus zur Verfügung stehende Bauraum vollständig ausgenutzt werden und ein von der Leistung her größtmöglicher Elektromotor eingebaut werden. Zudem wird eine Gewichtsersparnis erzielt, da auf ein separates Motorgehäuse verzichtet wird.

Um auch mit leistungsschwächeren Elektromotoren arbeiten zu können und/oder die regelmäßig sehr hohe Elektromotordrehzahl auf die notwendige Antriebsdrehzahl für den Arbeitskorpus zu untersetzen, kann in Weiterbildung der Erfindung dem Elektromotor ein Getriebe zugeordnet sein, das vorteilhafterweise ebenfalls im Inneren des Arbeitskorpus aufgenommen ist. Die aus dem Elektromotor und dem diesem zugeordneten Getriebe bestehende Baugruppe ist hierbei vollständig in den Innenraum des Arbeitskorpus integriert.

Das Getriebe kann hierbei grundsätzlich verschieden ausgebildet sein und an den zur Verfügung stehenden Innenraum des Arbeitskorpus des Arbeitsgeräts angepasst sein. In Weiterbildung der Erfindung kann insbesondere ein Planetengetriebe Verwendung finden, das auf kleinem Bauraum große Untersetzungen bzw. Übersetzungen zulässt und daher gut in den Arbeitskorpus auch bei kleinerem Durchmesser des Arbeitskorpus zu integrieren ist.

Das in den Arbeitskorpus integrierte Getriebe kann hierbei grundsätzlich ähnlich wie der Elektromotor ein eigenes Gehäuse besitzen und/oder als separate Baugruppe ausgebildet sein, die in standardmäßiger Ausbildung in den Innenraum des Arbeitskorpus gesetzt wird, so dass der Arbeitskorpus lediglich eine separate Außenhaut bildet, die das Getriebe umschließt. Alternativ hierzu kann jedoch auch bezüglich des Getriebes vorgesehen sein, dass der Arbeitskorpus einen Teil des Getriebes bildet und/oder das Getriebe funktional in den Arbeitskorpus integriert ist. Beispielsweise kann eine Innenmantelfläche des Arbeitskorpus eine Getrieberadlauffläche bilden und/oder eine Verzahnung aufweisen, die mit einem Getrieberad des Getriebes kämmt. Ist beispielsweise das Getriebe als Planetengetriebe ausgebildet, kann die Innenmantelfläche des Arbeitskorpus als Hohlrad genutzt werden.

Um ausreichend große Leistungen zu erzielen, kann der Elektromotor und ein ggf. vorgesehenes Getriebe grundsätzlich die gesamte Baulänge des Arbeitskorpus bzw. die gesamte Länge dessen Innenraums ausnutzen.

Um eine zusätzliche Belastung des Arbeitskorpus selbst zu vermeiden bzw. weitgehend zu reduzieren, ist in Weiterbildung der Erfindung vorgesehen, dass der Elektromotor und/oder das damit verbundene Getriebe auf einer Drehachse des Arbeitskorpus abgestützt sind, mittels derer auch der Arbeitskorpus gelagert ist. Dies kann beispielsweise eine durchgehende Achse sein, auf der der Arbeitskorpus gelagert ist. Alternativ kann der Elektromotor jedoch auch auf einer einen Achsstummel bildenden Drehachse abgestützt sein, die nur einseitig an dem Arbeitskörper vorgesehen ist. Durch die Abstützung unmittelbar auf der Achse wird ein direkter Kraftfluss erzielt, der die Gewichts- und Lagerkräfte des Elektromotors direkt in die Lagerung des Arbeitskorpus ableitet und den Arbeitskorpus selbst nicht zusätzlich mit Kräften beaufschlagt.

Der Elektromotor zum Antreiben des jeweiligen Arbeitsaggregats kann grundsätzlich in verschiedener Art und Weise angesteuert werden. Regelmäßig kann hierzu eine Leistungselektronik mit einem Umrichter vorgesehen sein, der die benötigte Spannung bzw. Frequenz des Stroms umrichtet, um den Elektromotor entsprechend zu steuern. Um das Anbaugerät unabhängig von einer bestimmten Schlepperausbildung betreiben zu können, ist es vorteilhaft, wenn zumindest der Umrichter anbaugeräteseitig vorgesehen ist. Grundsätzlich kann dabei auch die gesamte Leistungselektronik am Anbaugerät vorgesehen sein, so dass letztlich nur eine Stromleitung vom Schlepper her zur Energieversorgung benötigt wird.

Erfindungsgemäß ist die Leistungselektronik ebenfalls in das Innere des Arbeitskorpus integriert, in dem auch der Elektromotor selbst angeordnet ist. Hierdurch ist auch die Leistungselektronik vor äußeren Einwirkungen geschützt. Zudem vereinfacht sich die Verkabelung zwischen Leistungselektronik und Elektromotor.

Grundsätzlich kann der elektrische Antrieb in verschiedene Arbeitsaggregate verschiedener Landmaschinen integriert werden. Besondere Vorteile ergeben sich hierbei dann, wenn das Anbaugerät als Ladewagen ausgebildet ist, der eine Pickup mit einer Stachelwalze zur Aufnahme von Erntegut vom Boden, einen Förderrotor zur Förderung des aufgenommenen Ernteguts in einen Erntegutspeicher und/oder eine Dosierwalze zum Entladen des Ernteguts aus dem Erntegutspeicher aufweist, wobei der elektrische Antrieb umfassend einen Elektromotor und ein diesem ggf. zugeordnetes Getriebe in den Arbeitskorpus der Stachelwalze, des Förderrotors und/oder der Dosierwalze zum Antreiben dieser Arbeitsaggregate integriert sein kann.

Ebenfalls vorteilhaft ist der Einsatz elektrischer Antriebe bei einem Mähwerk, das an einen Schlepper anbaubar ist. Der Elektromotor sowie ggf. ein diesem zugeordnetes Getriebe kann hierbei in den Arbeitskorpus des Messerrotors und/oder in den Arbeitskorpus einer nachgeschalteten Konditionierwalze integriert sein, um diese Bausteine anzutreiben.

Eine weitere vorteilhafte Anwendung ist in Weiterbildung der Erfindung eine Heuwerbungsmaschine in Form eines Schwaders oder eines Zetters, der zumindest einen Rechkreisel aufweist, der um eine aufrechte Drehachse antreibbar ist. Der Elektromotor sowie ein ggf. diesem zugeordnetes Getriebe ist hierbei vorteilhafterweise im Inneren des Arbeitskorpus des genannten Rechkreisels aufgenommen, um Letzteren anzutreiben.

Weiterhin vorteilhaft ist der Einsatz elektrischer Antriebe auch bei einer Kreiselegge, die an einen Schlepper anbaubar ist. Der Elektromotor sowie ggf. ein diesem zugeordnetes Getriebe kann hierbei in den Arbeitskorpus der Zinkenkreisel integriert sein, um die Eggenzinken anzutreiben.

Die vorliegende Erfindung wird nachfolgend anhand bevorzugter Ausführungsbeispiele und zugehöriger Zeichnungen näher erläutert. In den Zeichnungen zeigen:
- Fig. 1:: eine schematische Seitenansicht eines Ladewagens, der heckseitig an einen Schlepper angebaut ist, wobei der Schlepper frontseitig ein Mäh- werk trägt,
- Fig. 2:: eine schematische Schnittansicht eines rotatorisch antreibbaren Arbeits- korpus eines Arbeitsaggregats des Ladewagens bzw. des Mähwerks aus Fig. 1, wobei im Inneren des genannten Arbeitskorpus ein Elektromotor sowie eine Getriebestufe zum Antreiben des Arbeitsaggregats angeord- net ist,
- Fig. 3:: eine schematische Draufsicht auf ein heckseitig an einen Schlepper an- gebautes Mähwerk mit einer Mehrzahl von Schneidrotoren sowie einer nachgeschalteten Konditionierwalze, die durch jeweils integrierte elektri- sche Antriebe angetrieben werden können,
- Fig. 4:: eine schematische Draufsicht auf einen heckseitig an einen Schlepper angebauten Schwader, dessen Rechkreisel in Form von Rotoren durch darin integrierte elektrische Antriebe angetrieben werden können, und
- Fig. 5:: eine schematische Draufsicht auf eine heckseitig an einen Schlepper anbaubare Kreiselegge, deren Eggenzinken in Form von Zinkenkreisel durch darin integrierte elektrische Antriebe angetrieben werden können.

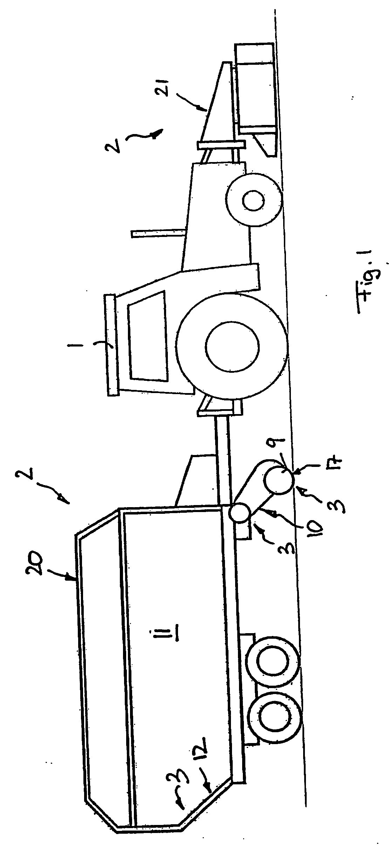

An den in Fig. 1 gezeigten Schlepper 1 sind zwei Anbaugeräte angebaut, die nach vorteilhaften Ausführungen der Erfindung einmal in Form eines Ladewagens 20 und im anderen Fall als frontangebautes Mähwerk 21 ausgebildet sind.

Der in Fig. 1 gezeigte Ladewagen 20 umfasst hierbei mehrere Arbeitsaggregate 3, die jeweils einen drehbar gelagerten Arbeitskorpus 4 umfassen. Ein erstes Arbeitsaggregat 3 bildet hierbei die Pickup 17 umfassend eine Stachelwalze 9 zum Aufsammeln von Erntegut vom Boden. Die Stachelwalze 9, die um eine liegende Querachse drehbar gelagert ist, wird hierbei rotatorisch angetrieben, um am Boden liegendes Erntegut in einen Förderkanal zu fördern. Die genannte Stachelwalze 9 kann in Weiterbildung der Erfindung einen rohrförmigen Arbeitskorpus 4 umfassen, von dessen Umfang stachelförmige Mitnehmerzinken abstehen.

Ein weiteres Arbeitsaggregat 3 ist ein Förderer umfassend einen Förderrotor 10, der das von der Pickup 17 aufgenommene Erntegut übernimmt und in den Erntegutspeicher 11 des Ladewagens 20 fördert. Auch der Förderrotor 10 kann in Weiterbildung der Erfindung einen rohrförmigen Arbeitskorpus 4 umfassen, von dessen Umfang Rotorzinken abstehen, die das Erntegut fördern.

Ein weiteres Arbeitsaggregat des Ladewagens 20 kann eine heckseitig angebrachte Dosiervorrichtung mit mindestens einer, vorzugsweise mehrere Dosierwalzen 12, die heckseitig das Erntegut aus dem Erntegutspeicher 11 dosiert abladen. Die genannten Dosierwalzen 12 können in Weiterbildung der Erfindung ebenfalls rohrförmig ausgebildete Arbeitskorpi 4 umfassen, von denen Dosierzinken abstehen.

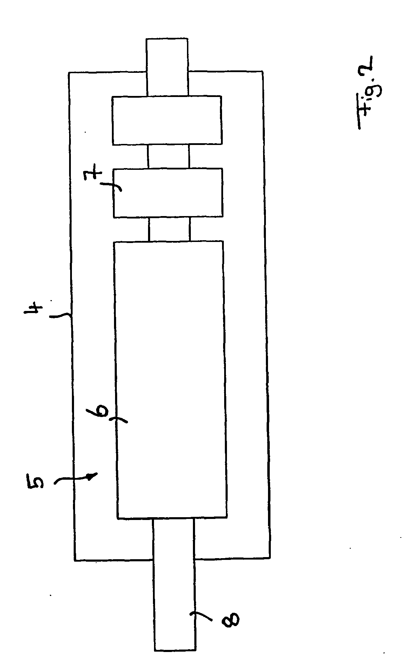

Um die genannten Arbeitskörper 4 der Arbeitsaggregate anzutreiben, sitzt in Weiterbildung der Erfindung jeweils im Inneren des jeweiligen Arbeitskorpus 4 ein Elektromotor 6, wie dies Fig. 2 zeigt. Der Elektromotor 6 ist hierbei vorteilhafterweise vollständig im Inneren des jeweiligen Arbeitskorpus 4 aufgenommen und von dem rohr- bzw. walzenförmigen Arbeitskorpus 4 zumindest umfangsseitig vollständig umschlossen Wie Fig. 2 zeigt, sitzt der Elektromotor 6 unmittelbar auf der Achse 8 des rohrförmigen Arbeitskorpus 4, die auch den genannten Arbeitskorpus 4 abstützt und drehbar lagert.

Wie Fig. 2 zeigt, kann der Elektromotor 6 mit einem Getriebe 7 beispielsweise in Form eines zweistufigen Planetengetriebes verbunden sein, das vorteilhafterweise ebenfalls auf der genannten Achse 8 abgestützt ist und in Weiterbildung der Erfindung ebenfalls im Inneren des Arbeitskorpus 4 aufgenommen ist.

Wie Fig. 2 zeigt, ist auch das Getriebe 7 vorteilhafterweise vollständig im Inneren des Arbeitskorpus 4 aufgenommen und von diesem umfangsseitig vollständig umschlossen.

Wie Fig. 2 zeigt, können der Elektromotor 6 und das Getriebe 7 im Wesentlichen die vollständige axiale Länge des Arbeitskorpus 4 ausfüllen, wobei vorzugsweise der Elektromotor 6 sich über eine größere Länge erstreckt als das Getriebe 7, so dass der Elektromotor 6 eine hohe Leistungsfähigkeit haben kann.

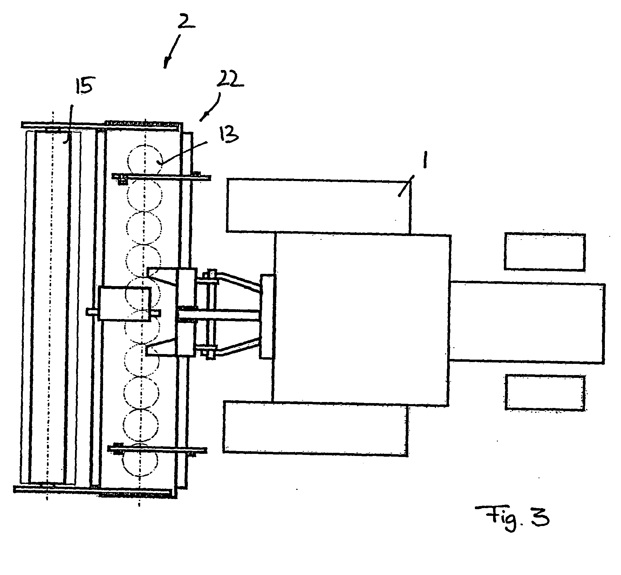

Das in Fig. 1 gezeigte Frontmähwerk 21 kann ebenso wie das in Fig. 3 gezeigte heckseitig angebaute Mähwerk 22 in an sich bekannter Weise eine Vielzahl von Messertrommeln bzw. Messerrotoren 13 umfassen, die um aufrechte Achsen antreibbar sind und radial abstehende bzw. ausschwenkbare Messer besitzen, um das stehende Erntegut zu schneiden.

Die genannten Messerrotoren 13 können in ähnlicher Weise wie der Ladewagen 20 rohrförmigen Arbeitskorpi 4 aufweisen, in deren Innenraum in der in Fig. 2 gezeigten Weise ein Elektromotor 6 sowie ein Getriebe 7 angeordnet sein können, um die Messerrotoren 13 anzutreiben.

Wie Fig. 3 zeigt, kann das Mähwerk 22 nach der gezeichneten Ausführung auch noch eine den Messerrotoren 13 nachgeschaltete Konditionierwalze 15 umfassen, die das geschnittene Erntegut durch mechanische Bearbeitung konditioniert, insbesondere knickt und/oder die Oberfläche aufbricht, um ein rascheres Trocknen zu ermöglichen. Die genannte Konditionierwalze 15 umfasst vorteilhafterweise ebenfalls einen rohr- bzw. walzenförmigen Arbeitskorpus 4, in den ein Antrieb 5 umfassend einen Elektromotor 6 und ggf. ein Getriebe 7 in der in Fig. 2 gezeigten Weise integriert ist.

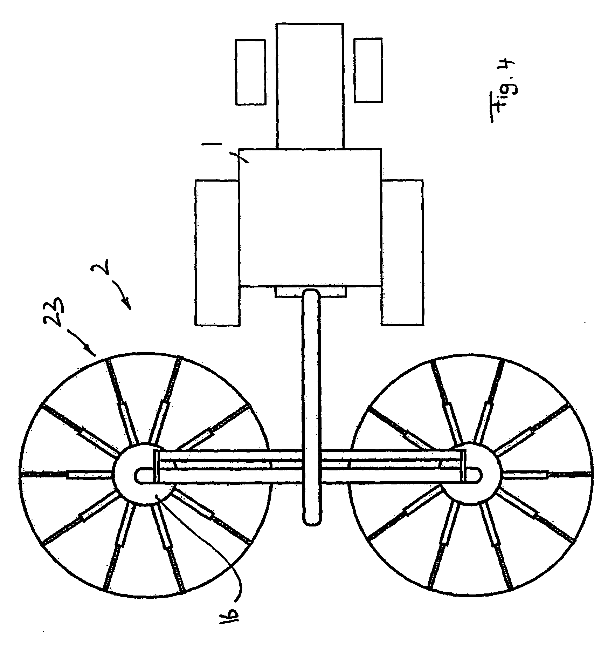

Wie Fig. 4 zeigt, kann das Anbaugerät 2 auch als Heuwerbungsmaschine in Form eines Schwaders ausgebildet sein, der in der gezeichneten Ausführungsform zwei um jeweils eine aufrechte Achse rotatorisch antreibbare Rechkreisel 16 aufweist.

Die genannten Rechkreisel 16 der Heuwerbungsmaschine 23 können in Weiterbildung der Erfindung hierbei in der in Fig. 2 gezeichneten Weise jeweils einen Arbeitskorpus 4 umfassen, in den ein Antrieb 5 mit einem Elektromotor 6 und ggf. einem Getriebe 7 integriert sind.

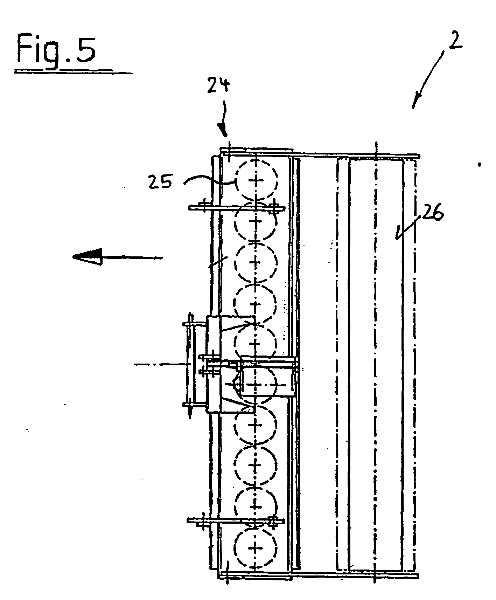

Wie Fig. 5 zeigt, kann das Anbaugerät 2 auch als Kreiselegge ausgebildet sein, die in der gezeichneten Ausführungsform eine quer zur Fahrtrichtung ausgerichtete Reihe von Zinkenkreisel 25 aufweist, die jeweils um eine aufrechte Achse rotatorisch antreibbar sind. Die genannten Zinkenkreisel umfassen dabei jeweils nach unten auf den Boden gerichtete Eggenzinken sowie einen wie in der Fig. 2 gezeichneten Weise ausgebildeten Arbeitskorpus 4, in den ein Antrieb 5 mit einem Elektromotor 6 und ggf. einem Getriebe 7 integriert sind. Die Kreiselegge 24 kann dabei für jeden Zinkenkreisel separat einen Elektromotor besitzen. Alternativ können auch einzelne oder mehrere Zinkenkreisel zu einer Gruppe zusammengefasst sein, die von einem Elektromotor in dem Arbeitskorpus eines Zinkenkreisels angetrieben werden. Wie Fig. 5 zeigt, läuft den Eggenzinken 25 eine Walze 26 nach.

## Patentansprüche

1. Landwirtschaftliches Anbaugerät zum Anbau an einen Schlepper (1), mit einem Arbeitsaggregat (3) zum Ausführen einer landwirtschaftlichen Funktion, insbesondere Ernte- oder Saatgutbearbeitung oder Bodenbearbeitung, wobei das Arbeitsaggregat (3) zumindest einen drehbar gelagerten Arbeitskorpus (4) aufweist, der von einem Antrieb (5) umfassend einen Elektromotor (6) rotatorisch antreibbar ist, **dadurch gekennzeichnet, dass** der Elektromotor (6) im Inneren des Arbeitskorpus (4) aufgenommen ist, wobei eine Leistungselektronik umfassend einen Umrichter zur Ansteuerung des Elektromotors (6) ebenfalls im Inneren des Arbeitskorpus aufgenommen ist.

2. Landwirtschaftliches Anbaugerät nach dem vorhergehenden Anspruch, wobei der Arbeitskorpus (4) einen länglichen Hohlkörper aufweist, der den Elektromotor (6) umschließt.

3. Landwirtschaftliches Anbaugerät nach dem vorhergehenden Anspruch, wobei der längliche Hohlkörper ein Rohr oder eine Walze bildet.

4. Landwirtschaftliches Anbaugerät nach einem der vorhergehenden Ansprüche, wobei der Arbeitskorpus (4) ein Gehäuse für den Elektromotor (6) bildet, der selbst ohne eigenes Motorgehäuse ausgebildet ist.

5. Landwirtschaftliches Anbaugerät nach einem der vorhergehenden Ansprüche, wobei dem Elektromotor (6) ein Getriebe (7), vorzugsweise in Form eines Planetengetriebes, zugeordnet ist, das ebenfalls im Inneren des Arbeitskorpus (4) aufgenommen ist.

6. Landwirtschaftliches Anbaugerät nach dem vorhergehenden Anspruch, wobei eine Innenmantelfläche des Arbeitskorpus (4) eine Getriebelauffläche bildet und/oder eine mit einem Getrieberad kämmende Verzahnung aufweist.

7. Landwirtschaftlichen Anbaugerät nach einem der vorhergehenden Ansprüche, wobei der Elektromotor (6) ggf. zusammen mit einem daran angeschlossenen Getriebe mehr als zwei Drittel, vorzugsweise im Wesentlichen die gesamte Länge des Arbeitskorpus (4) ausfüllt.

8. Landwirtschaftliches Anbaugerät nach einem der vorhergehenden Ansprüche, wobei der Elektromotor (6) und/oder ein damit verbundenes Getriebe (7) auf einer Drehachse (8) des Arbeitskorpus (4) abgestützt sind, mittels derer auch der Arbeitskorpus (4) an einem Maschinenrahmen oder einem anderen Haltebeschlag gelagert ist.

9. Landwirtschaftliches Anbaugerät nach einem der vorhergehenden Ansprüche, wobei das Anbaugerät als Ladewagen ausgebildet ist, der eine Pickup mit einer Stachelwalze (9) zur Aufnahme von Erntegut vom Boden, einen Förderrotor (10) zur Förderung des aufgenommenen Ernteguts in einen Erntegutspeicher (11) und/oder eine Dosierwalze (12) zum Entladen des Ernteguts aus dem Erntegutspeicher (11) aufweist, wobei der Elektromotor (6) in den Arbeitskorpus (4) der Stachelwalze (9), des Förderrotors (10) und/oder der Dosierwalze (12) integriert ist.

10. Landwirtschaftliches Anbaugerät nach einem der vorhergehenden Ansprüche, wobei das Anbaugerät als Mähmaschine umfassend zumindest einen Messerrotor und/oder eine Konditionierwalze (14) ausgebildet ist, wobei der Elektromotor (6) in den Arbeitskorpus (4) des Messerrotors (13) und/oder der Konditionierwalze (15) integriert ist.

11. Landwirtschaftliches Anbaugerät nach dem vorhergehenden Anspruch, wobei die Mähmaschine ein Querförderband zur Querförderung abgemähten Ernteguts aufweist, wobei der Elektromotor (6) in den Arbeitskorpus (4) eines Querförderbandantriebes angeordnet ist.

12. Landwirtschaftliches Anbaugerät nach einem der vorhergehenden Ansprüche, wobei das Arbeitsgerät als Heuwerbungsmaschine in Form eines Schwaders und/oder Zetters ausgebildet ist, der zumindest einen um eine aufrechte Achse rotatorisch antreibbaren Rechkreisel (16) aufweist, wobei der Elektromotor (6) in den Arbeitskorpus (4) des Rechkreisels (16) integriert ist.

13. Landwirtschaftliches Anbaugerät nach einem der vorhergehenden Ansprüche, wobei das Arbeitsgerät als Kreiselegge ausgebildet ist, die zumindest einen, vorzugsweise eine Vielzahl von, rotatorisch antreibbaren Eggenzinken aufweist, wobei der Elektromotor (6) in den Arbeitskorpus des Zinkenkreisels integriert ist.

## Claims

1. An agricultural attachment item for attaching to a tractor (1), having a piece of working equipment (3) for carrying out an agricultural function, in particular harvest processing or seed processing or soil processing, wherein the piece of working equipment (3) has at least one rotatably supported working body (4) which can be driven by a drive (5) including an electric motor (6), **characterised in that** the electric motor (6) is received in the interior of the working body (4), with performance electronics including an inverter for controlling the electric motor (6) likewise being received in the interior of the working body.

2. An agricultural attachment item in accordance with the preceding claim, wherein the working body (4) has an elongate hollow body which surrounds the electric motor (6).

3. An agricultural attachment item in accordance with the preceding claim, wherein the elongate hollow body forms a tube or a roller.

4. An agricultural attachment item in accordance with one of the preceding claims, wherein the working body (4) forms a housing for the electric motor (6) which is itself formed without a separate motor housing.

5. An agricultural attachment item in accordance with one of the preceding claims, wherein a transmission (7), preferably in the form of a planetary transmission, is associated with the electric motor (6) and is likewise received in the interior of the working body (4).

6. An agricultural attachment item in accordance with the preceding claim, wherein an inner jacket surface of the working body (4) forms a transmission running surface and/or has a toothed arrangement meshing with a transmission gear.

7. An agricultural attachment item in accordance with one of the preceding claims, wherein the electric motor (6), optionally together with a transmission connected thereto, takes up more than two thirds of the length, preferably substantially the total length, of the working body (4).

8. An agricultural attachment item in accordance with one of the preceding claims, wherein the electric motor (6) and/or a transmission (7) associated therewith is/are supported on a rotational axle (8) of the working body (4), by means of which rotational axle the working body (4) is also supported at a machine frame or at another holding fitting.

9. An agricultural attachment item in accordance with one of the preceding claims, wherein the attachment item is designed as a self-loading wagon which has a pick-up having a spiked roller (9) for taking up harvest from the ground, a conveyor rotor (10) for conveying the taken up harvest into a harvest store (11) and/or a doctor roll (12) for unloading the harvest from the harvest store (11), wherein the electric motor (6) is integrated into the working body (4) of the spiked roller (9), of the conveyor rotor (10) and/or of the doctor roller (12).

10. An agricultural attachment item in accordance with one of the preceding claims, wherein the attachment item is designed as a reaping machine which includes at least one blade rotor (13) and/or a conditioner roller (14), wherein the electric motor (6) is integrated into the working body (4) of the blade rotor (13) and/or of the conditioner roller (15).

11. An agricultural attachment item in accordance with the preceding claim, wherein the reaping machine has a transverse conveyor belt for the transverse conveying of reaped harvest, wherein the electric motor (6) is arranged in the working body (4) of a transverse conveyor belt drive.

12. An agricultural attachment item in accordance with one of the preceding claims, wherein the piece of working equipment is designed as a hay-making machine in the form of a swather and/or of a tedder which has at least one rotary rake (16) rotationally drivable about an upright axis, wherein the electric motor (6) is integrated into the working body (4) of the rotary rake (16).

13. An agricultural attachment item in accordance with one of the preceding claims, wherein the piece of working equipment is formed as a rotary harrow which has at least one rotationally drivable harrow spike, preferably a plurality thereof, wherein the electric motor (6) is integrated into the working body of the rotary spike.

## Revendications

1. Outil agricole porté pour le raccordement à un tracteur (1), avec un appareil de travail (3) pour l'exécution d'une fonction agricole, en particulier le travail de la récolte ou des semences ou le travail du sol, où l'appareil de travail (3) présente au moins un corps de travail (4) logé d'une manière tournante, apte à être entraîné en rotation par un entraînement (5) comprenant un moteur électrique (6), **caractérisé en ce que** le moteur électrique (6) est reçu dans l'intérieur du corps de travail (4), où une électronique de puissance, comprenant un convertisseur, pour la commande du moteur électrique (6), est reçue également à l'intérieur du corps de travail.

2. Outil agricole porté selon la revendication précédente, où le corps de travail (4) présente un corps creux oblong qui renferme le moteur électrique (6).

3. Outil agricole porté selon la revendication précédente, où le corps creux oblong forme un tube ou un rouleau.

4. Outil agricole porté selon l'une des revendications précédentes, où le corps de travail (4) forme un boîtier pour le moteur électrique (6) qui est réalisé en tant que tel sans carter de moteur propre.

5. Outil agricole porté selon l'une des revendications précédentes, où est associé au moteur électrique (6) un mécanisme de transmission (7), de préférence sous la forme d'un engrenage planétaire, qui est reçu également à l'intérieur du corps de travail (4).

6. Outil agricole porté selon la revendication précédente, où une face d'enveloppe intérieure du corps de travail (4) forme une surface de roulement d'engrenage et/ou présente une denture engrenant avec la roue d'engrenage.

7. Outil agricole porté selon l'une des revendications précédentes, où le moteur électrique (6), le cas échéant ensemble avec un mécanisme de transmission relié à celui-ci, remplit plus que deux tiers, de préférence sensiblement toute la longueur du corps de travail (4).

8. Outil agricole porté selon l'une des revendications précédentes, où le moteur électrique (6) et/ou un mécanisme de transmission (7) relié à celui-ci s'appuie sur un axe de rotation (8) du corps de travail (4) au moyen duquel également le corps de travail (4) est logé à un châssis de machine ou une autre pièce de retenue.

9. Outil agricole porté selon l'une des revendications précédentes, où l'outil porté est réalisé comme véhicule de chargement, qui présente un ramasseur avec un cylindre à pointes (9) pour récupérer un matériel de récolte du sol, un rotor de convoyage (10) sur le convoyage du matériel de récolte reçu dans un réservoir de matériel de récolte (11) et/ou un cylindre de dosage (12) pour évacuer le matériau de récolte du réservoir de matériau de récolte (11), où le moteur électrique (6) est intégré dans le corps de travail (4) du cylindre à pointes (9), du rotor de convoyage (10) et/ou du cylindre de dosage (12).

10. Outil agricole porté selon l'une des revendications précédentes, où l'outil porté est réalisé comme moissonneuse, comprenant au moins un rotor à lames et/ou un cylindre de conditionnement (14), où le moteur électrique (6) est intégré dans le corps de travail (4) du rotor à lames (13) et/ou du cylindre de conditionnement (15).

11. Outil agricole porté selon la revendication précédente, où la moissonneuse présente une bande de transport transversale pour le transport transversal du matériel de récolte moissonné, où le moteur électrique (6) est disposé dans le corps de travail (4) d'un entraînement de bande de transport transversale.

12. Outil agricole porté selon l'une des revendications précédentes, où l'appareil de travail est réalisé comme machine pour la fenaison sous la forme d'une andaineuse et/ou d'un épandeur-faneur combiné, qui présente au moins un rotor de râtelage (16) apte à être entraîné en rotation autour d'un axe vertical, le moteur électrique (6) étant intégré dans le corps de travail (4) du rotor de râtelage (16).

13. Outil agricole porté selon l'une des revendications précédentes, où l'appareil de travail est réalisé comme herse rotative, qui présente au moins une, de préférence une pluralité de dents de herse aptes à être entraînées en rotation, où le moteur électrique (6) est intégré dans le corps de travail du rotor à dents.
